# EUROPEAN PATENT SPECIFICATION

(11) **EP 0 941 974 B1**
(45) Date of publication and mention of the grant of the patent: **12.01.2005**
(21) Application number: 98941705.0
(22) Date of filing: 03.09.1998
(51) Int. Cl.: C04B 7/02, C04B 7/44

(54) **METHOD OF PRODUCTION OF CEMENT**
VERFAHREN ZUR HERSTELLUNG VON ZEMENT
PROCEDE DE PRODUCTION DE CIMENT

(30) Priority: 26.09.1997 JP 26180997
(43) Date of publication of application: 15.09.1999
(73) Proprietor: Taiheiyo Cement Corporation, Tokyo 101-0065 (JP)
(72) Inventor: TOKITAKA, Shinji, Tokuyama-shi, Yamaguchi 746-0082 (JP); FUJII, Takashi, Shinnanyo-shi, Yamaguchi 746-0012 (JP); SERI, Naokiyo, Shinnanyo-shi, Yamaguchi 746-0012 (JP); ITO, Mitsuhiro, Taiheiyo Cement Corporation, Tokyo 101-0065 (JP); HIRAO, Hiroshi, Taiheiyo Cement Corporation, Sakura-shi, Chiba 285-0802 (JP)
(74) Representative: Polte, Willi, Dr.-Ing. Dipl.-Ing.
(86) International application number: PCT/JP1998/003958
(87) International publication number: WO 1999/016722

(56) References cited:
- JP-A- 6 100 343
- PATENT ABSTRACTS OF JAPAN vol. 1999, no. 12, 29 October 1999 (1999-10-29) & JP 11 189442 A (MITSUBISHI MATERIALS CORP), 13 July 1999 (1999-07-13)

## Description

### Technical Field to which the Invention belongs

The present invention relates to a process for producing Portland cement while reducing the content of hexavalent chromium in cement.

### Prior Art

Raw materials for cement usually contain trace amounts of chromium oxide (mostly trivalent), most of which becomes incorporated into cement clinker without volatilizing even at the maximum temperature (for example, about 1450°C) in the rotary kiln. Meanwhile, there is a case that the refractory bricks used at the inner wall of the rotary kiln, particularly at the part that the temperature becomes high, contain chromium oxide (mostly trivalent) in order to increase its durability. The chromium oxide contained in the refractory bricks are also often incorporated in the cement clinker by wearing little by little while producing cement. Part of trivalent chromium oxide changes into hexavalent chromium oxide on oxidation in the oxidizing atmosphere at high temperature in the rotary kiln.

### Problem to be solved by the Invention

The formation of hexavalent chromium is desired to be suppressed as much as possible from the standpoint of environmental protection. However, any means to prevent this formation has not been found yet.

The present invention was completed to solve this problem. It is an object of the present invention to provide a process for producing cement which can reduce the content of hexavalent chromium contained in cement clinker without impairing the quality of the cement clinker.

### Means for solving the Problem

The gist of the present invention resides in a process for producing Portland cement clinker using a rotary kiln, the process comprising supplying auxiliary fuel for oxidizing itself and consuming oxygen to the raw material in the rotary kiln in the region from the position where the temperature is highest in the rotary kiln to the outlet of the rotary kiln and/or into an inlet of a clinker cooler connected to the outlet of the rotary kiln.

The present invention is based on the finding from experiments and investigations that hexavalent chromium forms in an extremely narrow zone in the rotary kiln. One point of the present invention lies in adding a small amount of combustible material to the object to be burnt passing through the narrow zone of the rotary kiln in which oxidation from trivalent chromium to hexavalent chromium takes place. The combustible material is one which burns more slowly than the main fuel for the rotary kiln existing around so that it is not burned (or oxidized) by the surrounding high temperature and oxygen before it reaches the object to be burnt from the inlet (e.g., burner nozzle). Alternatively, the combustible material may be one which burns at the same rate as the main fuel but has a larger particle size than the main fuel.

### Brief Description of the Drawing

Fig. 1 is a schematic diagram showing calcination for cement production.
Fig. 2 is a graph showing the temperature of the raw material and the distribution of the oxygen concentration in the rotary kiln.
Fig. 3 is a schematic diagram showing the chromium concentration which varies from zone to zone due to calcination during cement production.

### Embodiment Mode for carrying out the Invention

The embodiment mode for carrying out the invention will be described with reference to the accompanying drawings.

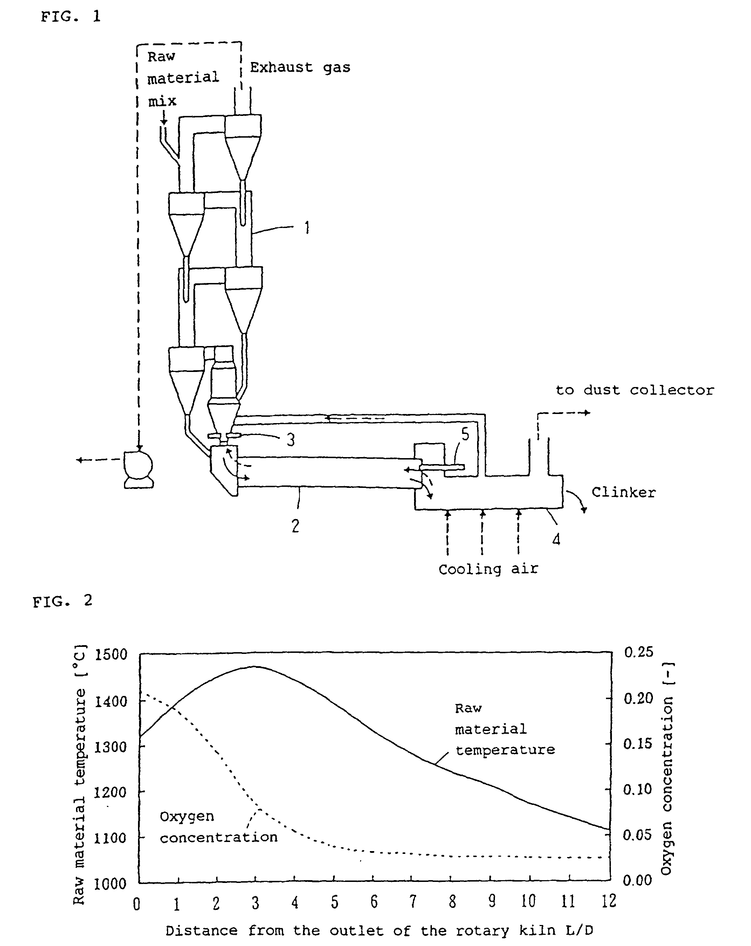

The production of cement entails calcination. The facilities for calcination consists of a suspension preheater 1 and a rotary kiln 2 as shown in Fig. 1. In this process, the raw material powder (consisting of limestone, clay, etc.) is changed into lumpy cement clinker (ready to be ground into cement) by decarboxylation reaction and calcination reaction.

The raw material powder is fed to the top of the suspension preheater 1 and then allowed to flow downward for preheating and decomposing calcium carbonate (main component of limestone) into calcium oxide and carbon dioxide by hot gas supplied from the temporary calcination burner 3 (optional) and the rotary kiln 2 which are provided below the suspension preheater 1, and the clinker cooler 4. In this step, the temperature of the raw material powder reaches about 850°C and the temperature of the exhaust gas near the temporary calcination burner 3 reaches about 900°C.

The preheated and decomposed raw material enters the rotary kiln 2 and moves toward the exit while being rotated. At the outlet side of the raw material, the kiln burner 5 which is supplied with pulverized coal and heavy oil (collectively called main fuel hereinafter) and air for fuel combustion is installed. In the rotary kiln 2, the temperature of the raw material gradually increases as it advances. The temperature reaches the maximum of about 1450°C at the burning zone. Beyond this point, the temperature decreases to about 1300°C and the raw material changes into cement clinker which is finally discharged from the rotary kiln 2. The position of the burning zone varies depending on the size of the rotary kiln 2. In the case of ordinary cement calcination rotary kiln 2, the burning zone is usually two to four times the internal diameter of the rotary kiln away from the outlet.

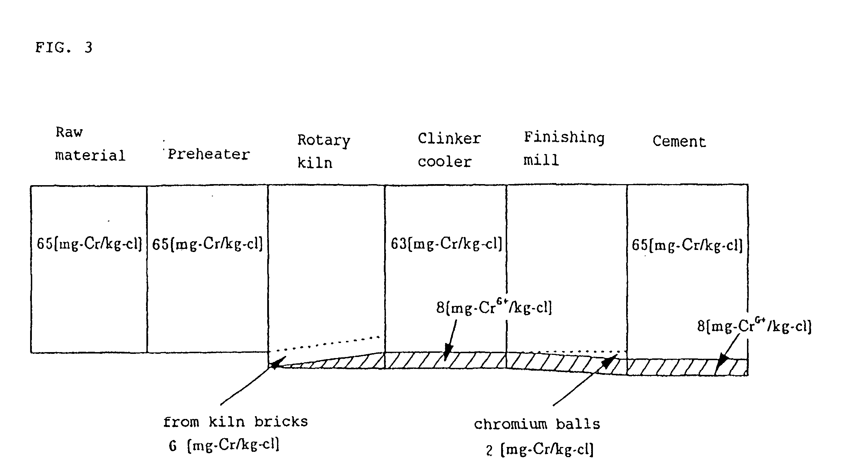

The outlet of the kiln is supplied with air for fuel combustion, and the concentration of oxygen in the rotary kiln 2 decreases in going from the outlet to the inlet, as shown in Fig. 2.

The suspension preheater 1 is supplied with a raw material for cement. This raw material contains trace amounts of chromium (mostly trivalent) as shown in Table 1 below. Chromium is naturally contained in limestone or the like as a component of the raw material. Incidentally, T.Cr in Table 1 stands for the total concentration of trivalent and hexavalent chromium.

**Table 1**

| Concentration of chromium in various samples (mg/kg) | | |
|---|---|---|
| Sample | T.Cr | Cr⁶⁺ |
| Cement raw material | 65 | N.D. |
| Clinker | 63 | 8 |
| Cement | 65 | 8 |

| | | |
|---|---|---|
| N.D. determination limit or lower | | |

It is noted from Table 1 that chromium in the raw material is present mostly in the trivalent form but trace amounts of hexavalent chromium are found in cement clinker calcined from the raw material or cement obtained by crushing the clinker with a small amount of gypsum. This suggests that oxidation of trivalent chromium into hexavalent chromium occurs during calcination.

For full investigation, samples were collected at various stages of calcination in a cement plant with typical facilities. The samples were analyzed for trivalent and hexavalent chromium. The results are shown in Fig. 3. It is noted from Fig. 3 that hexavalent chromium does not form in the suspension preheater 1 despite the fact that the temporary calcining burner 3 is provided and the temporary calcining furnace has an oxidizing atmosphere at a high temperature. However, it is also noted that hexavalent chromium is detected in cement clinker discharged from the rotary kiln 2. This suggests that hexavalent chromium should have formed somewhere in the rotary kiln 2. The formation of hexavalent chromium is an oxidation reaction which needs a high temperature and an oxidizing atmosphere (containing oxygen in comparatively high concentrations). Close examination into Fig. 2 in combination with Fig. 3 indicates the possibility that oxidation has occurred in the region between the burning zone and the kiln outlet. However, it is difficult to carry out sampling at various positions in the rotary kiln 2 in motion.

Therefore, the rotary kiln 2 is suspended, and the raw material stuck to and piled up to the bricks of the inner wall of the rotary kiln 2 (referred to as coaching) was sampled and analyzed. The results of analyses of these samples are shown in Table 2. The rotary kiln 2 which is used has an internal diameter of 5 m and the sampling positions are 6 m, 12 m, 20 m, 32 m, and 70 m away from the outlet.

**Table 2**

| Analyses of coaching in the kiln (mg/kg) | | |
|---|---|---|
| Sample taken at | T.Cr | Cr⁶⁺ |
| 6 m | 83 | 31 |
| 12 m | 111 | 44 |
| 20 m | 82 | 27 |
| 32 m | 58 | N.D. |
| 70 m | 62 | N.D. |

| | | |
|---|---|---|
| N.D. determination limit or less | | |

It is noted from Table 2 that hexavalent chromium is not detected in the region from the inlet to the vicinity of the burning zone (four times the diameter from the outlet) but the amount of hexavalent chromium rapidly increases beyond this region, as expected. The amount of hexavalent chromium in coaching in the rotary kiln 2, as shown in Table 2, is much higher than that in cement clinker, as shown in Table 1. This may be attributable to continuous enrichment of chromium originating from cement raw materials and refractory bricks outside the coaching.

It is concluded from the foregoing discussion that the formation of hexavalent chromium (or oxidation from trivalent to hexavalent) takes place in the vicinity of the burning zone and its downstream region in the rotary kiln 2 or in the oxidizing atmosphere at high temperatures. In other words, hexavalent chromium does not form in the suspension preheater 1, where there is an oxidizing atmosphere but the temperature is low (about 850°C), or in some regions in the rotary kiln 2, where the temperature is high (about 1400°C) but the oxygen concentration in the atmosphere is low.

The conclusion mentioned above gives a clue to a method of preventing the oxidation from trivalent chromium to hexavalent chromium in the vicinity of the burning zone and its downstream region in the rotary kiln 2. This method entails the addition of a material which oxidizes itself and consumes oxygen so as to prevent trivalent chromium in the object to be burnt from being oxidized in the oxidizing region or to reduce hexavalent chromium to trivalent chromium while the object to be burnt passes through the oxidizing region in the rotary kiln 2. (This material is referred to as an auxiliary fuel hereinafter.)

In practice, the auxiliary fuel is supplied, together with main fuel (pulverized coal, heavy oil or the like) and primary air, to the kiln burner 5 for main fuel installed at the outlet of the rotary kiln 2. Alternatively, the auxiliary fuel is supplied separately to a nozzle installed near the kiln burner 5. The auxiliary fuel should be supplied in an amount sufficient to prevent the oxidation of trivalent chromium or to promote the reduction of hexavalent chromium. In addition, the auxiliary fuel should not burn (or oxidize) with heat produced by combustion of main fuel and with separately supplied air for combustion before it falls on the object to be burnt being calcined.

The auxiliary fuel that meets such requirements is one which burns more slowly than the main fuel. It includes, for example, granular bituminous coal, coarse grains of solid plastics, compressed or solidified municipal waste, and heavy oil sludge. If the auxiliary fuel is identical with or similar to the main fuel in composition and has similar combustion rate, one which is 5-100 times as coarse as the main fuel is used (in terms of average particle diameter). Liquid fuel such as heavy oil may also be used as the auxiliary fuel if it is added dropwise (without atomization) onto the object to be burnt from the supply nozzle.

The auxiliary fuel should be added to the object to be burnt which is moving in the region from the burning zone to the outlet. The burning zone is the position where the temperature is highest in the rotary kiln 2. This position is about four times the internal diameter of the rotary kiln away from the outlet. This position is more effective if the range is within one to two times the internal diameter of the rotary kiln away from the outlet.

Further, the auxiliary fuel may be added at the inlet of the clinker cooler 4 which is connected to the outlet of the rotary kiln 2. At the inlet of the clinker cooler 4, the cement clinker (calcined product) has a temperature of about 1250°C. In the clinker cooler 4, the cement clinker is cooled by air (at normal temperature) flowing upward perpendicularly to the flow of cement clinker. Therefore, the auxiliary fuel does not oxidize easily but reduces hexavalent chromium (which has occurred in the rotary kiln 2) into trivalent chromium.

The present invention is characterized in that the auxiliary fuel is supplied independently, instead of being mixed with raw materials preliminarily, into the hot oxidizing atmosphere in which trivalent chromium in the object to be burnt is being oxidized into hexavalent chromium or to the object to be burnt (with trivalent chromium therein oxidized into hexavalent chromium) in the hot oxidizing atmosphere.

The auxiliary fuel is added at a position closer to the outlet than to the burning zone, as mentioned above. However, this position may be adjusted according to the velocity of carrier air (in the case of solid auxiliary fuel) or the jet velocity or feeding pressure (in the case of liquid auxiliary fuel).

The amount of the auxiliary fuel should be enough to prevent the oxidation of trivalent chromium into hexavalent chromium or to promote the reduction of hexavalent chromium into trivalent chromium. With an excess amount, the auxiliary fuel would produce a strong reducing atmosphere which promotes the reduction of trivalent iron into divalent iron or prevents the oxidation of divalent iron into trivalent iron, which impairs the quality (particularly compressive strength) of cement. Therefore, an adequate amount should be established to avoid such troubles. The results of experiments suggest that the amount of the auxiliary fuel should be 0.5-5%, preferably 1-3%, of the total heat quantity for cement calcination.

### EXAMPLES

The present invention was practiced in actual cement production by supplying the burner 5 of the rotary kiln 2 with the main fuel and carrier air and combustion air, together with a small amount of the auxiliary fuel (which is solidified waste). The auxiliary fuel was added to the object to be burnt in the vicinity of the burning zone. Table 3 shows the calcination state of the clinker, and Table 4 shows the quality of the cement obtained. For comparison, Tables 3 and 4 also show data according to the conventional process.

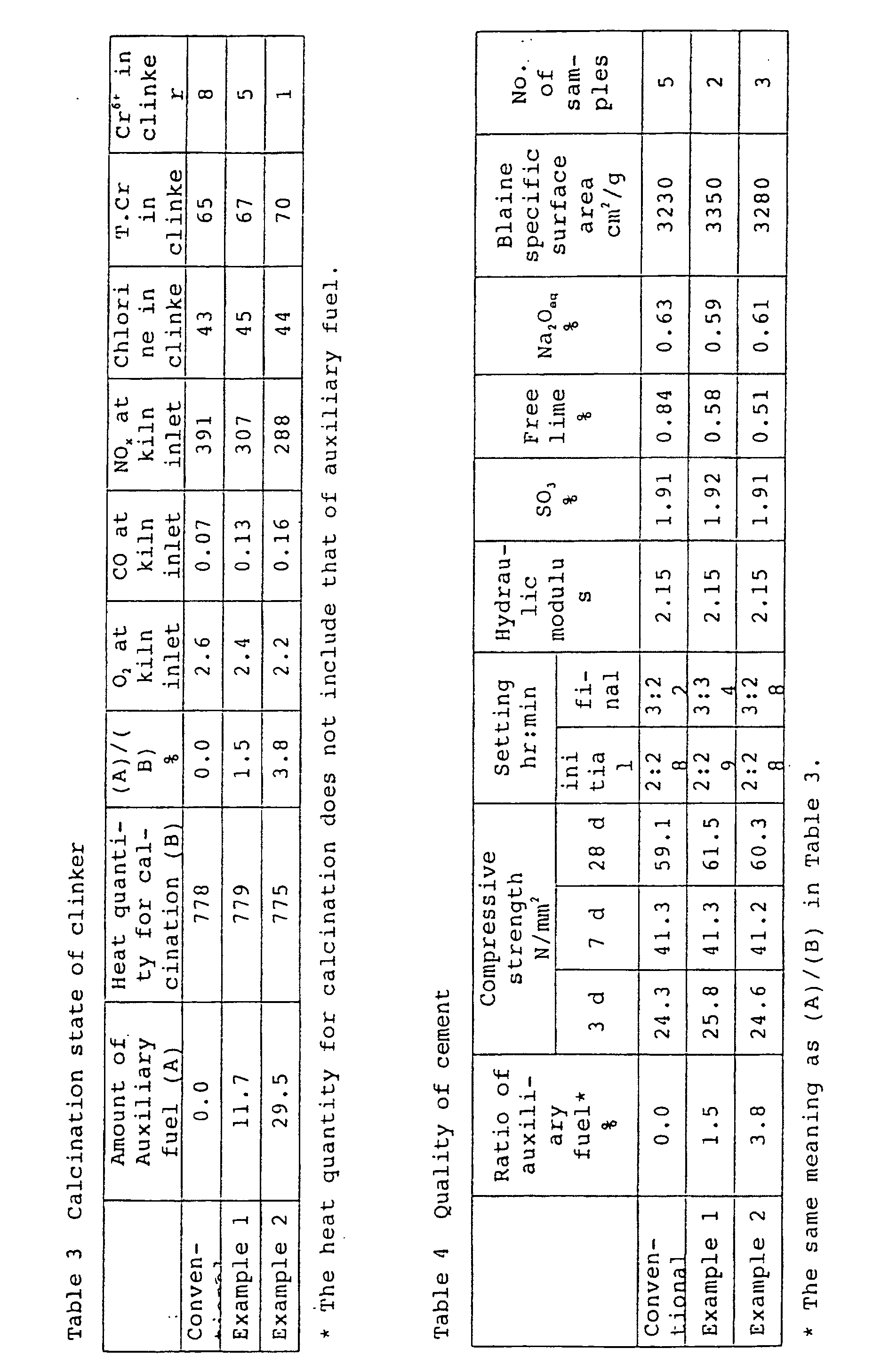

It is noted from Tables 3 and 4 that the process of the present invention makes it possible to reduce the content of hexavalent chromium in cement clinker without impairing the cement quality such as compressive strength and setting time.

### [Effect of the invention]

The present invention is designed to add a combustible material to the object to be burnt which is in the region from the position where the temperature is highest in the rotary kiln to the outlet of the rotary kiln, thereby forming an atmosphere in which the oxygen concentration is comparatively low, making it possible to reduce the content of hexavalent chromium in cement clinker without impairing the quality of the cement produced.

## Claims

1. A process for producing Portland cement clinker using a rotary kiln (2) provided with a rotary kiln burner (5), raw material for cement being supplied to the rotary kiln, main fuel and primary air for burning the raw material being supplied to the rotary kiln (2) by the rotary kiln burner (5), **characterized in that** auxiliary fuel is supplied to the raw material in the rotary kiln (2) in the region from the position where the temperature is highest in the rotary kiln (2) to the outlet of the rotary kiln (2), preferable about four times the internal diameter of the rotary kiln (2) away from the outlet of the rotary kiln (2) to the outlet of the rotary kiln (2), and/or auxiliary fuel is supplied into an inlet of a clinker cooler (4) connected to the outlet of the rotary kiln (2).

2. A process according to claim 1, **characterized in that** the auxiliary fuel is added in such an amount that the heat quantity of the auxiliary fuel accounts for 0,5-5% of the total heat quantity used for cement production.

3. A process according to claim 1 or 2, **characterized in that** the auxiliary fuel is one any of granular bituminous coal, heavy oil sludge, coarse grains of solid plastics, and compressed or solidified waste.

4. A process according to any of claims 1 to 3, **characterized in that** the auxiliary fuel is one which burns more slowly than the main fuel used for cement production.

5. A process according to any of claims 1 to 3, **characterized in that** the auxiliary fuel is one which burns as fast as the main fuel used for cement production and is 5-100 times as coarse (in terms of average particle diameter) as the main fuel used for cement production.

6. A process according to any of claims 1, 2, 4 or 5, **characterized in that** the auxiliary fuel is a liquid fuel which is added dropwise onto the raw material.

7. A process according to any of the preceding claims, **characterized in that** the auxiliazy fuel is fed into the rotary kiln (2) together with the primary air for the rotary kiln burner (5).

8. A process according to any of claims 1 to 6, **characterized in that** the auxiliary fuel is fed into the rotary kiln (2) from a nozzle seperatly from the rotary kiln burner (5).

## Patentansprüche

1. Verfahren zur Herstellung von Portland Zementklinker unter Verwendung eines Drehofens (2), der mit einem Drehofenbrenner (5) versehen ist, von Rohmaterial für Zement, das zum Drehofen transportiert worden ist, eines Hauptbrennstoffs und einer Primärluft zur Verbrennung des Rohmaterials, das zum Drehofen (2) geliefert worden ist, mit dem Drehofenbrenner (5), **dadurch gekennzeichnet, daß** ein Hilfsbrennstoff zum Rohmaterial in den Drehofen (2) in den Bereich von der Position, in der die Temperatur in dem Drehofen (2) am höchsten ist, zum Auslaß des Drehofens (2) geliefert wird, vorzugsweise viermal den Innendurchmesser des Drehofens (2) von dem Auslaß des Drehofens (2) entfernt, und/oder ein Hilfsbrennstoff wird in den Einlaß eines Klinkerkühlers (4) geliefert, der mit dem Auslaß des Drehofens (2) verbunden ist.

2. Verfahren nach Anspruch 1, **dadurch gekennzeichnet, daß** der Hilfsbrennstoff in einer derartigen Menge hinzugefügt wird, daß die Wärmemenge des Hilfsbrennstoffs 0,5-5% der gesamten Wärmemenge ausmacht, die zur Zementherstellung verwendet wird.

3. Verfahren nach Anspruch 1 oder 2, **dadurch gekennzeichnet, daß** der Hilfsbrennstoff körnige Fettkohle, schwerer Ölschlamm, grobe Körner von festem Kunststoff oder verdichteter oder festgewordener Abfall ist.

4. Verfahren nach einem der Ansprüche 1 bis 3, **dadurch gekennzeichnet, daß** der Hilfsbrennstoff langsamer verbrennt als der Hauptbrennstoff, der zur Zementherstellung verwendet wird.

5. Verfahren nach einem der Ansprüche 1 bis 3, **dadurch gekennzeichnet, daß** der Hilfsbrennstoff genauso schnell verbrennt wie der Hauptbrennstoff, der zur Zementherstellung verwendet wird, und 5-100 mal so grob ist (bzgl. des durchschnittlichen Partikeldurchmessers) wie der Hauptbrennstoff, der zur Zementherstellung verwendet wird.

6. Verfahren nach einem der Ansprüche 1, 2, 4 oder 5, **dadurch gekennzeichnet, daß** der Hilfsbrennstoff ein flüssiger Brennstoff ist, der tröpfchenweise auf das Rohmaterial hinzugegeben wird.

7. Verfahren nach einem der vorhergehenden Ansprüche, **dadurch gekennzeichnet, daß** der Hilfsbrennstoff zusammen mit der Primärluft für den Drehofenbrenner (5) in den Drehofen (2) geführt wird.

8. Verfahren nach einem der Ansprüche 1 bis 6, **dadurch gekennzeichnet, daß** der Hilfsbrennstoff in den Drehofen (2) von einer Düse geführt wird, die getrennt von dem Drehofenbrenner (5) ist.

## Revendications

1. Un procédé de production de clinker de ciment Portland utilisant un four rotatif (2) muni d'un brûleur de four rotatif (5), de la matière brute pour ciment étant amenée au four rotatif, du combustible principal et de l'air primaire pour brûler la matière brute étant amenés au four rotatif (2) par le brûleur de four rotatif (5), **caractérisé en ce que** du combustible auxiliaire est amené à la matière brute du four rotatif (2) dans la zone depuis la position où la température est plus élevée dans le four rotatif (2) jusqu'à la sortie du four rotatif (2), de préférence autour de quatre fois le diamètre interne du four rotatif (2) à distance de la sortie du four rotatif (2) à la sortie du four rotatif (2), et/ou du combustible auxiliaire est amené à une entrée d'un refroidisseur de clinker (4) relié à la sortie du four rotatif (2).

2. Un procédé selon la revendication 1, **caractérisé en ce que** le combustible auxiliaire est ajouté en un montant tel que la quantité de chaleur du combustible auxiliaire compte pour 0,5-5% de la quantité de chaleur totale utilisée pour la production du ciment.

3. Un procédé selon la revendication 1 ou 2, **caractérisé en ce que** le combustible auxiliaire est l'un quelconque parmi du charbon bitumineux granulaire, de la boue d'huile lourde, des grains grossiers de matières plastiques dures et des déchets comprimés ou solidifiés.

4. Un procédé selon l'une quelconque des revendications 1 à 3, **caractérisé en ce que** le combustible auxiliaire en est un qui brûle plus lentement que le combustible principal utilisé pour la production du ciment.

5. Un procédé selon l'une quelconque des revendications 1 à 3, **caractérisé en ce que** le combustible auxiliaire en est un qui brûle aussi rapidement que le combustible principal utilisé pour la production du ciment et est 5-100 fois aussi grossier (en termes de diamètre moyen des particules) que le combustible principal utilisé pour la production du ciment.

6. Un procédé selon l'une quelconque des revendications 1, 2, 4 ou 5, **caractérisé en ce que** le combustible auxiliaire est un combustible liquide qui est ajouté goutte à goutte sur la matière brute.

7. Un procédé selon l'une quelconque des revendications précédentes, **caractérisé en ce que** le combustible auxiliaire est amené au four rotatif (2) en même temps que l'air primaire pour le brûleur de four rotatif (5).

8. Un procédé selon l'une quelconque des revendications 1 à 6, **caractérisé en ce que** le combustible auxiliaire est amené au four rotatif (2) à partir d'une buse de manière séparée du brûleur de four rotatif (5).
